# EUROPEAN PATENT APPLICATION

(11) **EP 2 778 919 A2**
(43) Date of publication of application: **17.09.2014**
(21) Application number: 14158960.6
(22) Date of filing: 11.03.2014
(51) Int. Cl.: G06F 9/50, G06F 9/455, G06F 12/08

(54) **System, method and computer-readable medium for dynamic cache sharing in a flash-based caching solution supporting virtual machines**

(30) Priority: 11.03.2013 IN KA02702013
(71) Applicant: LSI Corporation, San Jose, CA 95131 (US)
(72) Inventor: Venkatesha, Pradeep Radhakrishna, 560085 Bangalore, Karnataka (IN); Panda, Siddhartha Kumar, 560100 Bangalore, Karnataka (IN); Maharana, Parag, Fremont, CA California 95131 (US); Bert, Luca, Cumming, GA 30041 (US)
(74) Representative: Williams, David John

(57) **Abstract**

A cache controller implemented in O/S kernel, driver and application levels within a guest virtual machine dynamically allocates a cache store to virtual machines for improved responsiveness to changing demands of virtual machines. A single cache device or a group of cache devices are provisioned as multiple logical devices and exposed to a resource allocator. A core caching algorithm executes in the guest virtual machine. As new virtual machines are added under the management of the virtual machine monitor, existing virtual machines are prompted to relinquish a portion of the cache store allocated for use by the respective existing machines. The relinquished cache is allocated to the new machine. Similarly, if a virtual machine is shutdown or migrated to a new host system, the cache capacity allocated to the virtual machine is redistributed among the remaining virtual machines being managed by the virtual machine monitor.

## Description

### TECHNICAL FIELD OF THE INVENTION

The invention relates generally to data storage systems and, more specifically, to data storage systems employing a Flash-memory based data cache.

### BACKGROUND OF THE INVENTION

With technology advancements provided by multi-core processors and input-output (I/O) interconnects the capability of today's servers to execute applications is growing at a rapid pace. However, the I/O speeds of traditional data storage devices, such as hard-disk drives, that support the server are not increasing at the same rate as the I/O interconnects and multi-core processors. Consequently, I/O operations to the traditional data storage devices have become a bottleneck that is limiting application performance. Stated another way, applications executing on a server are not able to fully use the computing speed and data transfer capabilities available.

Some conventional computing systems employ a non-volatile memory device as a block or file level storage alternative for slower data storage devices (e.g., a magnetic disk storage medium, an optical disk storage medium or one or more data storage devices accessible via a network), to improve performance of the computing system and/or applications executed by the computing system. In this respect, because input/output (I/O) operations can be performed significantly faster to some non-volatile memory devices (hereinafter a "cache device" for simplicity) than from or to a slower storage device, use of the cache device provides opportunities to significantly improve the rate of I/O operations.

Enterprise class solid state disks (SSDs) and peripheral component interconnect express (PCIe) based on board solid state storage have been deployed in an attempt to address the I/O bottleneck by providing far superior I/O data rate performance. However, SSDs are relatively expensive and the performance improvement does not always justify the investment of deploying SSDs for all long term storage. Accordingly, SSDs are deployed to boost the performance of a server by using the SSDs as a cache to store frequently used data.

Recent development in virtualization solutions enable data centers to consolidate and share hardware resources across multiple emulated machines. That is, a single server can provide shared resources in what appears to the client users as a dedicated server platform. The popularity of these network enabled virtualization solutions have introduced additional strain on I/O performance. For example, it is easy to predict that some applications will be in use and will receive more I/O requests at particular times of the day. However, with many clients accessing a particular hardware platform it is sometimes impossible to predict application performance hits when multiple client I/O requests reach the server at a particular instant. Server side caching in virtualized environments can significantly accelerate application performance by moving the frequently accessed "hot" data from the long term storage devices to a SSD coupled to the server.

A challenge in implementing server-side caching in a virtualized environment is how to share the cache store available in a single SSD/PCIe based cache device across multiple client machines. Virtualization features that enable virtual machines to be migrated to a new hardware platform by moving a virtual machine's file system from one storage system to another (e.g., vMotion) and server virtualization that enables platform virtualization on machines that support the 64-bit extension to the x86 processor instruction set necessitate that server-side caching needs to be dynamic to accommodate the various virtual server machines that are migrating in or out of the physical machine.

### SUMMARY

Embodiments of a system and method for dynamically managing a cache store for improved responsiveness to changing demands of virtual machines provision a single cache device or a group of cache devices as multiple logical devices and expose the same to a virtual machine monitor. A core caching algorithm executes in the guest virtual machine. As new virtual machines are added under the management of the virtual machine monitor, existing virtual machines are prompted to relinquish a portion of the cache store allocated for use by the respective existing machines. The relinquished cache is allocated to the new machine. Similarly, if a virtual machine is shutdown or migrated to a new host system, the cache capacity allocated to the virtual machine is redistributed among the remaining virtual machines being managed by the virtual machine monitor.

In an exemplary embodiment, a cache resource management system suitable for dynamically managing a cache store supported by a group of one or more flash-based devices and a host computer system managing a set of virtual machines is disclosed. The system includes a cache resource manager, a virtual machine manager, a plugin, and a driver. The cache resource manager is an application executing on the host computer system. The cache resource manager is configured with one or more policies for distributing multiples of an identified portion of the available cache storage capacity (e.g., an extent) in accordance with the number of virtual machines supported by the host computing system. The virtual machine manager is integrated in the kernel of the O/S executing on the host computer system. The virtual machine manager is arranged with a cache resource allocator and a flash-based cache device driver. The cache resource allocator claims a group of flash-based cache devices, allocates a logical drive to each virtual machine, and identifies a portion of the available cache storage capacity provided by the group of flash-based devices. The plugin communicates with a virtual infrastructure client and provides context from the perspective of a virtual machine, virtual machine manager, and a guest virtual machine to at least one flash-based cache device. A driver, available to each virtual machine, enables communications with the group of flash-based cache devices as if the virtual machine were communicating with a dedicated storage device.

In another exemplary embodiment, a method for managing a cache store supported by a group of one or more flash-based devices and a host computer system managing a set of virtual machines is disclosed. The method includes the steps of providing a cache resource manager application to a virtual machine manager, the cache resource manager using one or more policies for distributing multiples of an identified portion of the available cache storage capacity in accordance with the number of virtual machines supported by the host computing system, providing a cache resource allocator and a flash-based cache device driver to a virtual machine manager, the cache resource allocator claiming a group of flash-based cache devices, allocating a logical drive to each virtual machine and identifying a portion of the available cache storage capacity provided by the group of flash-based devices, providing a plugin to a virtual infrastructure client, the plugin providing virtual machine, virtual machine manager, and guest context to at least one flash-based cache device and exposing a driver to each virtual machine to enable the virtual machine to communicate with the group of flash-based cache devices as if the virtual machine were communicating with a dedicated storage device.

In another exemplary embodiment, a computer-readable medium having executable instructions stored thereon in non-transitory form that, when executed on a processing system of a host computer, direct the processing system to coordinate the following tasks. A cache resource allocator module is directed to claim cache devices coupled to the host computer. A cache resource manager is started and communicates with the cache resource allocator to determine available cache devices and scans the host computer to determine a number of virtual machines supported by the host computer. Once the number of virtual machines and the available cache devices are identified, the cache resource manager directs the cache resource allocator to divide an available cache capacity into equal sized extents, create logical drives, and an extent map in accordance with a cache allocation policy. The processing system further directs the cache resource manager to map each logical drive to a respective virtual machine and associate an extent map with each logical drive. Thereafter, the processing system directs the virtual machine to add a cache device to a cache group.

There is provided a computer-readable medium having stored thereon in computer executable npn- transitory form instructions that, when executed on a processing system of a host computer, direct the processing system to: direct a cache resource allocator to claim cache devices coupled to the host computer; direct a cache resource manager application to: communicate with the cache resource allocator to determine available cache devices, and scan the host computer to determine a number of virtual machines supported by the host computer, once the number of virtual machines and the available cache devices identified, the cache resource manager directs the cache resource allocator to: divide an available cache capacity into equal sized extents, and create logical drives and an extent map in accordance with a cache allocation policy; further direct the cache resource manager to: map each logical drive to a respective virtual machine; and associate an extent map with each logical drive; and direct the virtual machine to: add a cache device to a cache group.

The processor may further be directed to instruct the virtual machine to process I/O operations via one of the cached devices.

The processor may further be directed to instruct a virtual machine manager to monitor the number of virtual machines actively supported by the host computer.

The virtual machine manager may detect a request to support an additional virtual machine, the cache resource allocator uses a policy to determine an amount of cache to be allocated to the new virtual machine, and the resource manager determines an amount of cache to be reclaimed from the virtual machines presently executing on the host computer, directs the virtual machines presently executing on the host computer to release the amount of cache, allocates the cache to the new virtual machine, updates the extent map, instructs the resource allocator to create a new logical drive and configures the new virtual machine with the cache device.

When the virtual machine manager detects a request to disable support for a virtual machine, the cache resource allocator may inform the cache resource manager as to an amount of cache storage that is available for redistribution among the remaining virtual machines executing on the host computer, and the resource manager, in accordance with a policy, allocates the available cache to each of the remaining virtual machines, updates the extent map, instructs the resource allocator to remove the logical drive and reconfigures the remaining virtual machines with a respective portion of the available cache storage.

The policy may be based on one or more of equal cache distribution, a minimum guaranteed cache capacity, and current workloads of the respective virtual machines.

### BRIEF DESCRIPTION OF THE DRAWINGS

FIG. 1 is a schematic diagram illustrating a host computer environment in accordance with an exemplary embodiment of the invention.
FIG. 2 is a block diagram illustrating a cache data layout within a cache group of FIG. 1.
FIG. 3 is a schematic illustration of the architecture of a dynamic cache sharing system of FIG. 1.
FIG. 4 is a schematic illustration of the allocation of a single cache device across a set of virtual machines.
FIG. 5 is a flow diagram illustrating a method for preparing the dynamic cache sharing system of FIG. 3.
FIG. 6 is a schematic illustration of an extent map after a new virtual machine is introduced.
FIG. 7 is a flow diagram illustrating a method for processing I/O operations using the dynamic cache sharing system of FIG. 3.
FIGs. 8A and 8B include a flow diagram illustrating a method for dynamically managing a cache store.

### DETAILED DESCRIPTION OF AN ILLUSTRATIVE EMBODIMENT

A dynamic cache sharing system implemented in O/S kernel, driver and application levels within a guest virtual machine dynamically allocates a cache store to virtual machines for improved responsiveness to changing storage demands of virtual machines on a host computer as the virtual machines are added or removed from the control of a virtual machine manager. A single cache device or a group of cache devices are provisioned as multiple logical devices and exposed to a resource allocator. A core caching algorithm executes in the guest virtual machine. The core caching algorithm operates as an O/S agnostic portable library with defined interfaces. A filter driver in the O/S stack intercepts I/O requests and routes the same through a cache management library to implement caching functions. The cache management library communicates with the filter driver for O/S specific actions and I/O routing. As new virtual machines are added under the management of the virtual machine manager, existing virtual machines are prompted to relinquish a portion of the cache store allocated for use by the respective existing machines. The relinquished cache is allocated to the new machine. Similarly, if a virtual machine is shutdown or migrated to a new host system, the cache capacity allocated to the virtual machine is redistributed among the remaining virtual machines being managed by the virtual machine monitor.

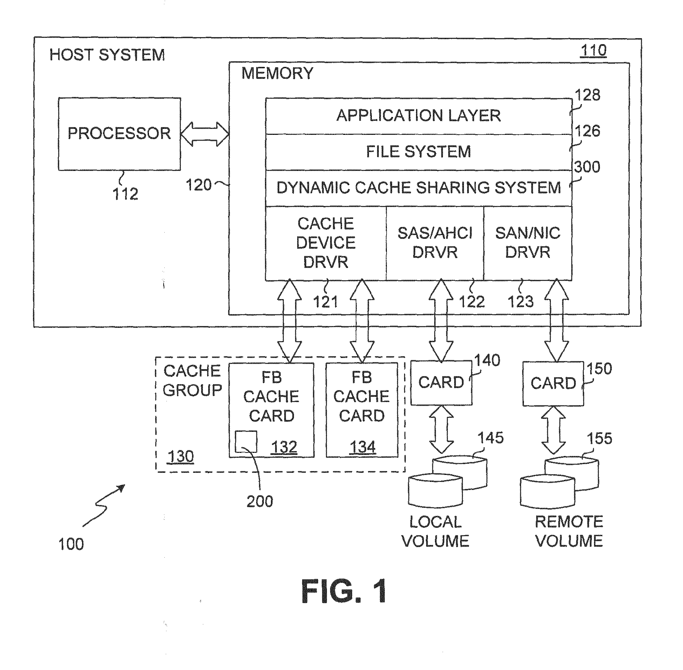

As illustrated in FIG. 1, in an illustrative or exemplary embodiment of a host computer environment 100 in accordance with the invention, a cache group 130 of flash-based cache devices such as FB cache card 132 and FB cache card 134 are coupled via respective peripheral component interface express (PCIe) busses to a host system 110. The FB cache card 132 and the FB cache card 134 are separately identified cache devices that are managed and their respective cache stores shared as a cache group 130.

In addition, the host system 110 is coupled via a peripheral interconnect card 140 to a set of local storage devices 145 and via a peripheral interconnect card 150 to a corresponding set of remote data storage devices 155. The local storage devices 145 and the remote data storage devices 155 are implemented with respective sets of physical disk drives exposed to the virtual environment 100 as composite data stores. One or both of the peripheral interconnect card 140 and the peripheral interconnect card 150 may manage the storage provided by the respective sets of physical disk drives using a redundant array of independent disks management technique that combines physical disk drives into a single logical unit. Data is distributed across the physical drives in one of several ways commonly known as "RAID levels," depending on the reliability and performance required by applications supported by the corresponding data store.

As indicated in FIG. 1, the host system 110 is a computer such as a server computer having a processor 112 and a memory 120 coupled to each other via a bus. In operation, the processor 112 executes instructions in the application layer 128, file system 126, and dynamic cache sharing system 300 to enable a host of virtual machines on the host system 110. The processor 112 communicates with the cache group 130 via the cache device driver 121. The processor 112 communicates with the local volume 145 via the serial-attached small computer system interface / advanced host computer interface (SAS/AHCI) driver 122 and peripheral interconnect card 140. The processor 112 further communicates with the remote volume 155 via the storage area network / network interface connector (SAN/NIC) driver 123 and peripheral interconnect card 150.

A host computer environment 100 in accordance with the invention is highly scalable and is not limited to a single processor 112 or a single memory 120. In alternative embodiments (not shown), the host system 110 may include multiple processors similar or dissimilar to the processor 112. In addition, the host system 110 may include additional memory elements similar or dissimilar to the memory 120. Similarly, additional storage devices may be integrated to the host system 110 by generating multiple instances cache device driver 121, the SAS/ACHI driver 122 and the SAN/NIC driver 123.

In operation, the dynamic cache sharing system 300 dynamically manages a cache store 200 supported by a group of one or more flash-based devices (e.g., cache group 130) and a host system 110 managing a set of virtual machines. The dynamic cache sharing system 300 is implemented at a shared device driver layer below the application layer 128 and file system 126. The dynamic cache sharing system 300 is a generic caching layer that integrates with flash-based cache devices (e.g., FB cache card 132 and FB cache card 134) and conventional data storage systems (e.g., data storage systems implemented with various interfaces such as internet small computer system interface (iSCSI), fibre channel over Ethernet (FCoE), fibre channel (FC), SAS, and serial advanced technology attachment (SATA). The dynamic cache sharing system 300 works at the block layer and is transparent to the file system 126 and applications in application layer 128. The dynamic cache sharing system 300 identifies and consumes storage resident in FB cache card 132 and FB cache card 134, which are integrated in the cache group 130. In addition, the dynamic cache sharing system 300 provides caching functions across conventional data storage systems such as local volume 145 and remote volume 155. Core caching functions are implemented as O/S agnostic portable libraries using well defined interfaces to the physical disks and the cache resource management applications.

Cache metadata management (like hash table, LRU, free list, cache allocation unit management data structure) is important to the design of a very large cache store. Since solid-state disk (SSD) cache can scale to terabytes and every I/O on the host system 110 involves looking up the hash table and a cache allocation unit data structure to decide a cache hit/miss, it is imperative that the cache metadata management should be optimized for performance and the metadata footprint should be small enough to be held in double data rate (DDR) random access memory (RAM) for quick look-ups.

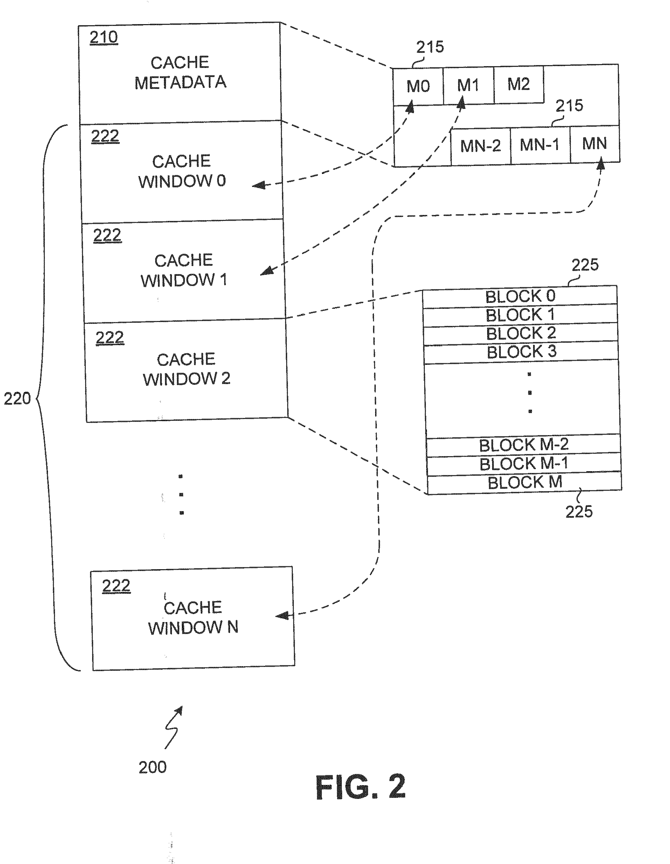

FIG. 2 is a block diagram illustrating a cache store 200 within the cache group 130 of FIG. 1. Cache store 200 is partitioned or divided into at least two separate storages areas. A first portion or partition includes cache metadata 210. A second or data storage portion 220 includes a set of cache windows 222. As further illustrated in FIG. 2, the cache metadata 210 includes a corresponding entry 215 for each cache window 222. A significant amount of the storage capacity of the cache store 300 is allocated to the regions identified in the illustration as cache windows. Each cache window is further subdivided into cache blocks 225 of lines of a desired size.

The allocation unit and the cache block size for the cache store 200 is significantly large to reduce metadata memory requirements. In an example embodiment, the entire cache data storage portion 200 is divided into multiple large chunks of allocation units called cache windows of 1 MB each. The cache window size is a tunable parameter and can be adjusted based on host system configuration and I/O workload. The cache window 222 is the allocation/deallocation unit for cache management. Each cache window 222 consists of multiple cache blocks 225 of 64KB each. The cache block size is a tunable parameter and can be adjusted based on host system configuration and I/O workload. The entire cache store 200 can be used to cache multiple block devices and each cache window 222 represents a contiguous region of space on a single block device.

A hash table, free cache list, least recently used (LRU) list and a cache replacement algorithm operate at the cache window level. This significantly reduces the amount of memory needed to represent cache metadata 210 as each cache window 222 is a significantly large allocation unit. The cache metadata 210 is held in-memory for read caching for quick look-ups. Cache replacement is based on demand, threshold, age and perhaps additional factors and uses multiple priority based LRU queues. The priority based LRU queues use the number of active cache lines and number of times a cache window 222 is accessed to determine the priority of the cache window 222. The cache windows 222 that are full and accessed most are given highest priority and are placed at the end of the highest priority LRU queue. Once the entire cache store 200 is full, the cache window 222 with the least priority will be replaced first, thereby retaining the most frequently requested data. An intelligent heat map generating algorithm caches regions that are repetitively accessed. Data regions in the local volume 145 or the remote volume 155 that are accessed infrequently are not placed in the cache store 200.

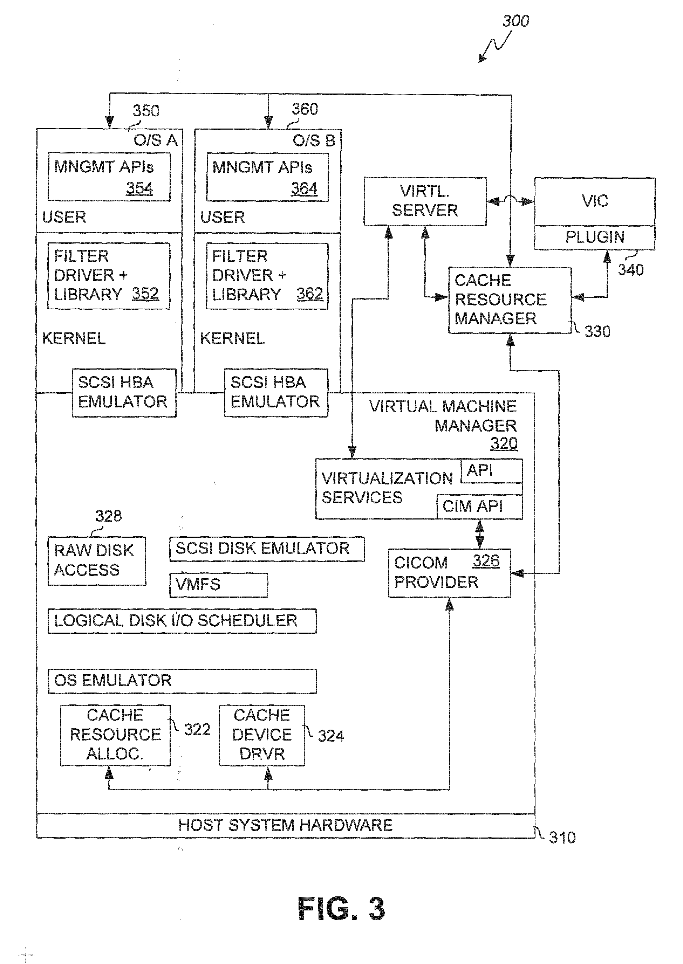

FIG. 3 is a schematic illustration of the architecture of a dynamic cache sharing system 300 of FIG. 1. The dynamic cache sharing system 300 includes a virtual machine manager 320 that communicates directly with host system hardware 310, cache resource manager 330:operating in the application layer 128 to support the various functions that enable real-time monitoring of a virtual environment executing on host system 110. The virtual machine manager 320 is an O/S component commonly known as the kernel. The virtual machine manager 320 receives monitoring information from virtual server and centrally manages the mechanisms that expose one or more flash-based cache devices in a cache group 130 to tens or hundreds of virtual machines supported by the host system hardware 310 and the data stores provided by local volume 145 and remote volume 155.

The virtual machine manager 320 is capable of supporting multiple O/Ss with each O/S having an application layer 128 interface to the virtual machine manager 320. In the illustrated embodiment, O/S A (e.g. Linux, Unix) is supported by an interface 350 which includes management APIs 354 in a user level and a filter driver and library 352 in a kernel level that communicates with the virtual machine manager 320 via a SCSI HBA emulator. Similary, O/S B (e.g., Windows Server 2008) is supported by an interface 360 which includes management APIs 364 and a filter driver and library 362.

The virtual machine manager 320 is arranged with a cache resource allocator 322, a cache device driver 324 and a CICOM provider 326 to manage and control cache store 200 and communicate with the cache resource manager 330. These and other component execute in the guest virtual machines on the host system 110 to provide I/O filtering, hot data classification, and caching functionality. The virtual machine manager 320 emulates the cache devices to the virtual machines using SCSI HBA emulators. Devices are exposed to the virtual machines in two ways. In a first way, the data storage devices are exposed as raw devices by a raw disk access module 328. The raw disk access module 328 device exposes SCSI block devices directly to the virtual machines. Otherwise, data stores are exposed to virtual machines via a virtual machine file system (VMFS) via a VMFS module integrated in the virtual machine manager 320. The VMFS module may store and manage maps that associate the virtual device logical block addresses to a physical disk or the cache store 200. The VMFS also creates thin provisioned logical stores to support data snapshots, backups, and other operations with the virtual disks. The physical device on which the VMFS provisioned disks reside is referred to as a data store. These virtual disks can be dynamically moved to different data stores (physical disks) in the dynamic cache sharing system 300 without any downtime to the virtual machine using the virtual infrastructure client (VIC) with management plugin 340.

The cache resource allocator 322 is responsible for identifying and claiming all cache devices in the dynamic cache sharing system 300 and allocates logical drives for each virtual machine on the system that is configured to communicate with the management components of the dynamic cache sharing system 300. The logical drives created by the cache resource allocator 322 are mapped as a RAW device to the guest virtual machine. The cache resource allocator 322 divides the entire cache capacity into multiple extents or blocks of equal size. The extent size is adjusted to be equal to the cache window size. The cache storage capacity is allocated to different virtual machines in extent boundary.

The cache resource allocator 322 provides a set well defined of APIs for creating and destroying logical drives for each virtual machine. Each logical drive created by the cache resource allocator is of the capacity of the maximum cache capacity supported by the dynamic cache sharing system 300, however only a few extents of the entire cache device are mapped to each virtual machine. The mapping information is provided by the cache resource manager 330. The mapping information can change dynamically during the life of the dynamic cache sharing system 300 based on the policies defined in the resource manager 330 and addition and removal of virtual machines over time.

The cache resource allocator 322 enforces the extent map defined by the cache resource manager by making sure that the I/Os corresponding to each logical drive are validated against the current active extent map. The cache resource allocator 322 redirects the I/O requests to the physical device via the cache device driver 324 or other drivers (not shown) based on the extent map.

The cache resource manager 330 is a relatively small and efficient software module that operates as a guest virtual machine on the host system 110. The cache resource manager 324 monitors and manages cache device utilization and distribution across all virtual machines under the control of the virtual machine manager 320. During initialization, the cache resource manager 324 connects to all virtual machines, allocates cache capacity and monitors cache utilization. The cache resource manager 324 further registers with the virtual server and waits for events such as virtual machine addition, removal, migration etc. via the virtualization services API of the virtual machine manager 320 and coordinates the redistribution of cache storage capacity across currently executing virtual machines.

In addition, the cache resource manager 324 executes a policy engine that is responsible for distributing the cache across the virtual machines in a controlled way. The policy engine may include policies that equally share cache capacity across all virtual machines, guarantee a minimum cache capacity to certain virtual machines and redistribute the remaining cache capacity across other virtual machines, maintain a heat map across all virtual machines and based on the I/O activity performed by each virtual machine, redistribute the cache depending on current workload.

When a new virtual machine is added or migrated to a physical machine, the cache resource manager 324 detects this event and tries to redistribute the cache across the available virtual machines by performing the following steps. First, the cache resource manager 324 requests the currently running guest virtual machines with allocated cache capacity to relinquish some amount of cache via the management APIs 354, 356 in the guest virtual machines. Since the extent size of the cache allocation is equal to the cache window size, the guest virtual machine can relinquish the least hot data from the top of its LRU queue thereby reducing the performance impact due to reduced cache allocation. Once all virtual machines on the host system 110 relinquish some amount of cache allocated to them, the freed cache extents are allocated to the new virtual machine that got added or migrated.

Plugin 340 is arranged to communicate with the virtual infrastructure client (VIC) to provide management capabilities to manage the dynamic cache sharing system solution in a virtual environment. The plugin 340 provides context to management actions in terms of datacenter cluster, host and guest. System administrators will be able to monitor and manage the dynamic cache sharing system solution using plugin 340. The plugin 340 interacts with virtual machines using the management APIs 354, 364 and the cache resource manager 330 to provide the above-described management functions.

Virtual machines will use the filter driver and libraries 352, 362 depending on the O/S being executed in the virtual machine. The filter driver and libraries 352, 362 enable the cache device to be configured with an extent map and ensure that the cache device only uses the extents that have been allocated to it. In addition, the filter driver and libraries 352, 362 enable the addition and removal of extents from the virtual machine during cache redistribution as a result of a new virtual machine being added, a virtual machine going offline, or migrated out of the host system 110. Furthermore, the filter driver and libraries 352, 362 ensure that raw devices exposed to the virtual machines are configured as cache devices.

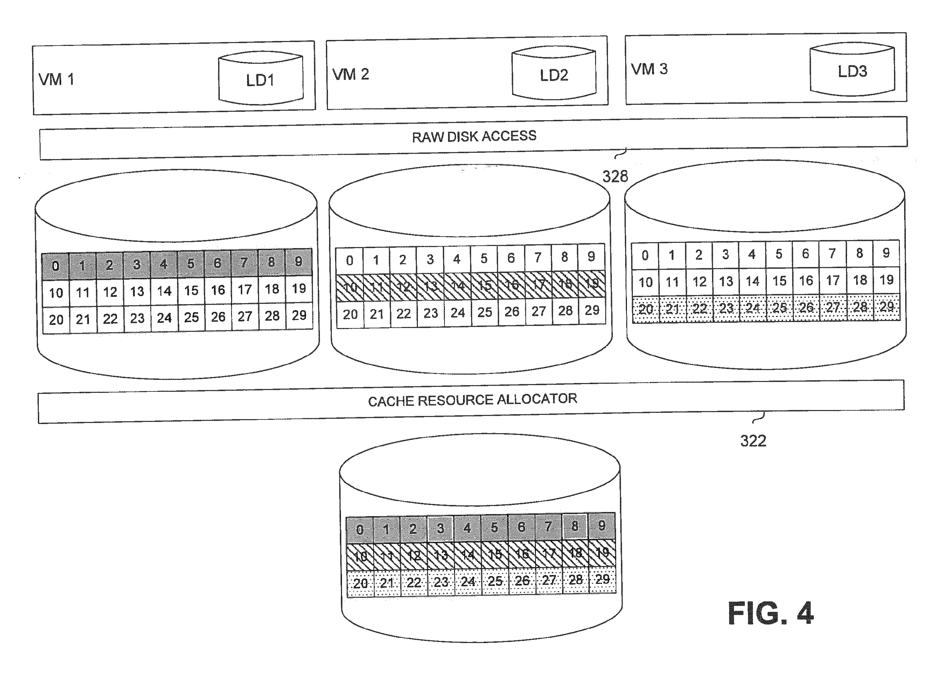

FIG. 4 is a schematic illustration of the allocation of a single cache device across a set of virtual machines with an equal cache distribution management policy. The embodiment illustrated in FIG. 4 is a small scale arrangement for illustrating and describing how three virtual machines would equally share the cache windows 222 of a flash-based cache store 200.

In the illustrated embodiment, the flash-based cache store 200 includes thirty cache windows (represented by blocks 0-29) with cache windows 0-9 associated with and identified to virtual machine 1 as logical disk 1, cache windows 10-19 associated with and identified to virtual machine 2 as logical disk 2, and cache windows 20-29 associated with and identified to virtual machine 3 as logical disk 3. The raw disk access module 328 working together with the cache resource allocator 322 completes the above-described association or link between the logical drives and designated contiguous set of blocks in the cache store 200.

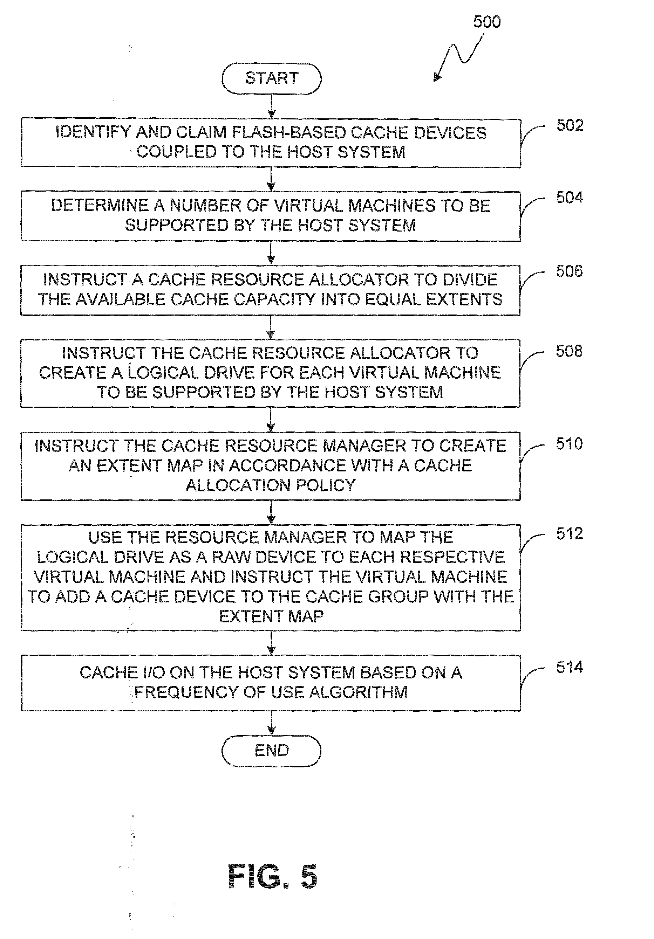

FIG. 5 is a flow diagram illustrating a method 500 for preparing the dynamic cache sharing system of FIG. 3. The method 500 begins with block 502, where a cache resource allocator identifies and claims flash-based cache devices coupled to a host system. In block 504, a virtual machine manager determines a number of virtual machines to be supported by the host system. In block 506, a dynamic cache sharing system executing in the host computer instructs the cache resource allocator to divide the available cache capacity into equal extents or blocks. In block 508, the cache resource allocator is further instructed create a logical drive for each virtual machine to be supported by the host system. In block 510, a cache resource manager is instructed to create an extent map in accordance with a cache allocation policy. In block 512, the resource manager maps the logical drives as respective raw devices to each virtual machine and further instructs the virtual machine to add a cache device to the cache group with the extent map. Thereafter, as indicated in block 514, I/O operations on the host system are cached based on a frequency of use algorithm.

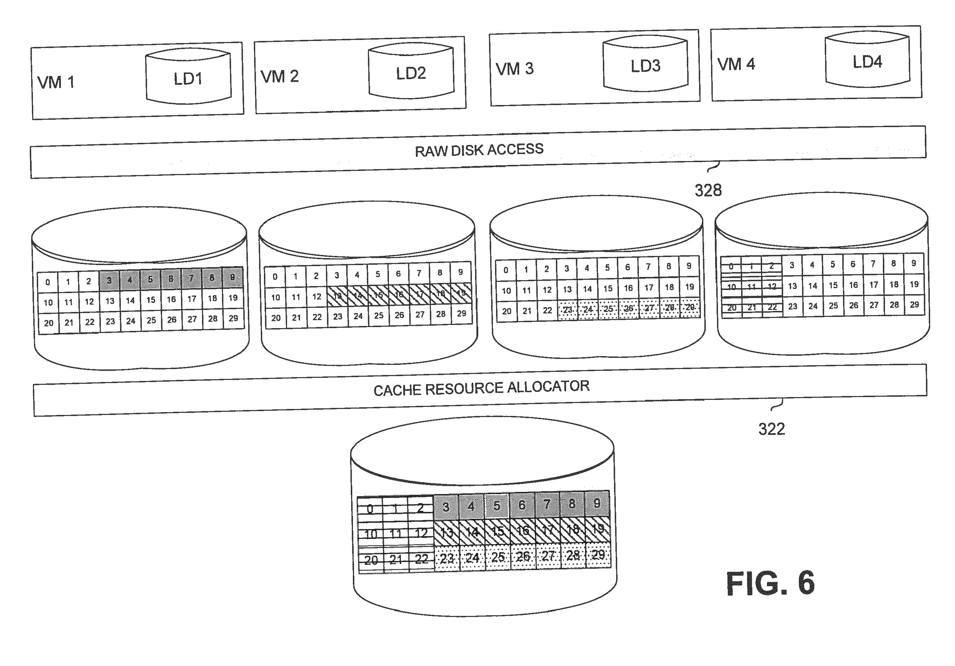

FIG. 6 is a schematic illustration of an extent map after a new virtual machine is introduced. The embodiment illustrated in FIG. 6 is a small scale arrangement for illustrating and describing how the addition of a fourth virtual machine is accomplished when an allocation policy that shares cache windows 222 equally from the flash-based cache store 200.

In the illustrated embodiment, the flash-based cache store 200 includes thirty cache windows (represented by blocks 0-29) with cache windows 3-9 associated with and identified to virtual machine 1 as logical disk 1, cache windows 13-19 associated with and identified to virtual machine 2 as logical disk 2, cache windows 23-29 associated with and identified to virtual machine 3 as logical disk 3. The released cache windows represented by labeled blocks 0-2, 10-12, and 20-22 are reallocated to virtual machine 4 as logical disk 4. After the reallocation, virtual machines 1-3 are each allocated 7 of the 30 total cache windows and virtual machine 4 is allocated the remaining 9 cache windows. The raw disk access module 328 working together with the cache resource allocator 322 completes the above-described association or link between the logical drives and the designated sets of blocks in the cache store 200.

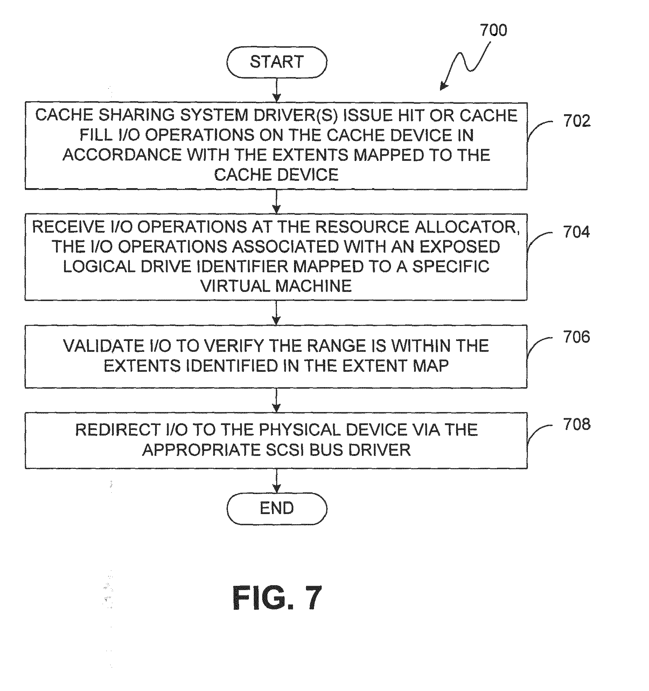

FIG. 7 is a flow diagram illustrating a method 700 for processing I/O operations using the dynamic cache sharing system 300 of FIG. 3. As indicated, the method 700 begins with block 702 where dynamic cache sharing system drivers issue hit or cache fill I/O operations on the cache device in accordance with the extents mapped to the cache device(s). In block 704, the resource allocator receives the I/O operations associated with an exposed logical drive identifier mapped to a specific virtual machine. In block 706, the resource allocator validate the I/O operation is within range of the extents identified in the extent map as belonging to the specified virtual machine. In block 708, the cache resource manager redirects I/O to the physical device via the appropriate SCSI driver.

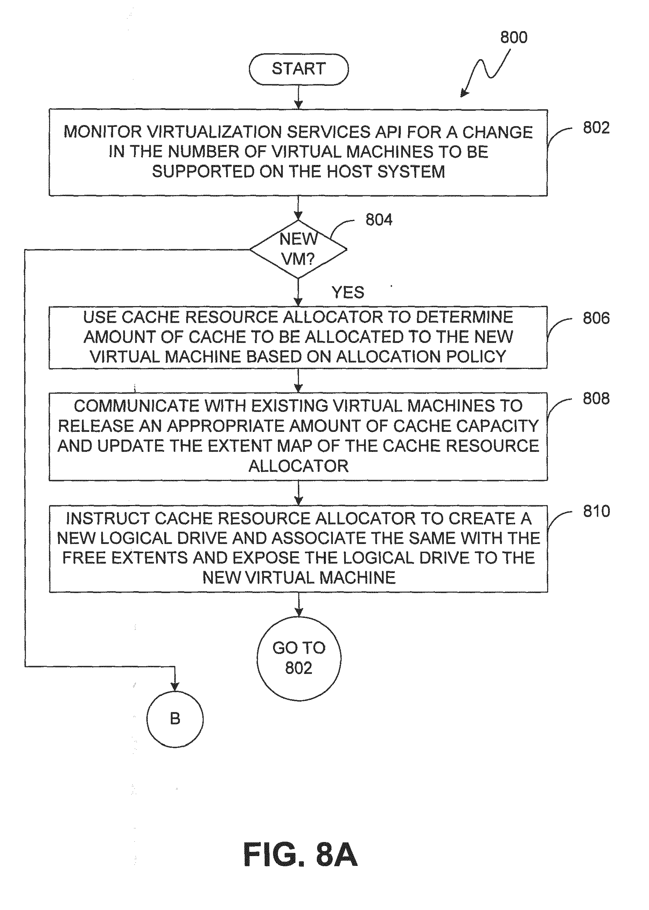

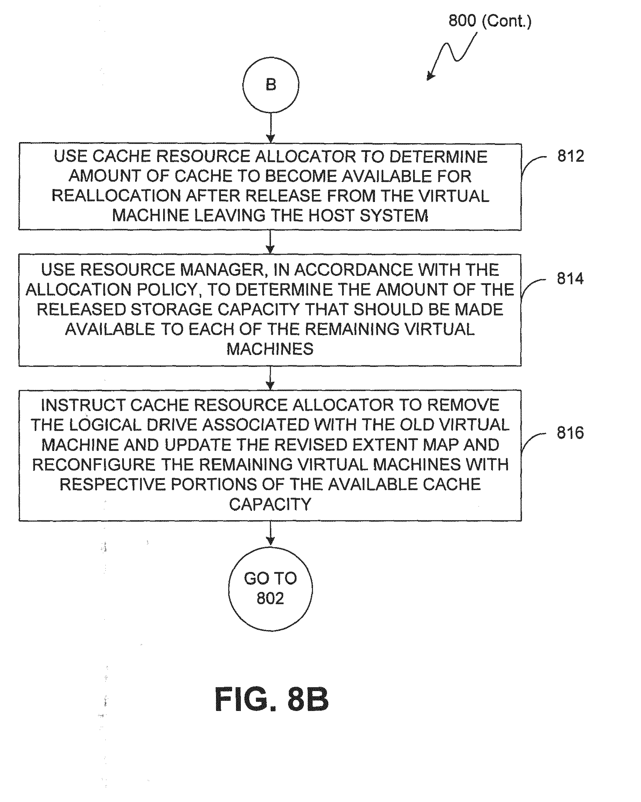

FIGs. 8A and 8B include a flow diagram illustrating a method 800 for dynamically managing a cache store. Method 800 begins with block 802 where a dynamic cache sharing system monitors a virtualization services API for a change in the number of virtual machines to be supported on a host system. As indicated in decision block 804, a determination is made whether a virtual machine is being added to or removed from the set of virtual machines being supported by the host machine. When a virtual machine is being added, as indicated by the flow control arrow labeled "Yes" exiting decision block 804, processing continues with block 806, where a cache resource allocator determines an amount of cache to be allocated to the new virtual machine based on an allocation policy. Otherwise, processing moves to block 812, as indicated by connector B. In block 808, a cache resource manager communicates with each existing virtual machine to release an appropriate amount of cache memory capacity for reallocation to the new virtual machine. In addition, the extent map is updated and communicated to the cache resource allocator. In block 810, the cache resource allocator is instructed to create a new logical drive and associate the same with the recently freed extents or cache windows. In addition, the cache resource allocator is instructed to expose the newly generated logical drive to the virtual machine. Thereafter, processing continues with the functionality of block 802.

When a virtual machine is being migrated away from the host system, processing continues with block 812, where the cache resource allocator determines an amount of cache capacity that will become available for reallocation to the remaining virtual machines after being released from the virtual machine leaving the host system. In block 814, the resource manager, in accordance with the allocation policy, determines the amount of the released storage capacity that should be made available to the remaining virtual machines. It should be noted that when the allocation policy so dictates, the amount of storage capacity reallocated to each virtual machine may not necessarily be equal. In block 816, the cache resource allocator is instructed to remove the logical drive associated with the old virtual machine and update the revised extent map and reconfigure the remaining virtual machines with respective portions of the available cache capacity.

It should be understood that the flow diagrams of FIGs. 5, 7, 8A and 8B are intended only to be exemplary or illustrative of the logic underlying the described methods. Persons skilled in the art will understand that in various embodiments, data processing systems including dynamic cache processing systems or cache controllers can be programmed or configured in any of various ways to effect the described methods. The steps or acts described above can occur in any suitable order or sequence, including in parallel or asynchronously with each other. Steps or acts described above with regard to FIGs. 5, 7, 8A and 8B can be combined with others or omitted in some embodiments. Although depicted for purposes of clarity in the form of a flow diagram in FIGs. 5, 7, 8A and 8B, the underlying logic can be modularized or otherwise arranged in any suitable manner. Persons skilled in the art will readily be capable of programming or configuring suitable software or suitable logic, such as in the form of an application-specific integrated circuit (ASIC) or similar device or combination of devices, to effect the above-described methods. Also, it should be understood that the combination of software instructions or similar logic and the local memory 120 or other memory elements in which such software instructions or similar logic is stored or embodied for execution by the processor 112, comprises a "computer-readable medium" or "computer program product" as that term is used in the patent lexicon.

It should be noted that the invention has been described with reference to one or more exemplary embodiments for the purpose of demonstrating the principles and concepts of the invention. The invention is not limited to these embodiments. As will be understood by persons skilled in the art, in view of the description provided herein, many variations may be made to the embodiments described herein and all such variations are within the scope of the invention as defined in the claims.

## Claims

1. A method for managing a cache store supported by a group of one or more flash-based devices and a host computer system managing a set of virtual machines, the method comprising:
providing a cache resource manager application to a virtual machine manager, the cache resource manager configured with one or more policies for distributing multiples of an identified portion of the available cache storage capacity in accordance with the number of virtual machines supported by the host computing system;
providing a cache resource allocator and a flash-based cache device driver to a virtual machine manager, the cache resource allocator configured to claim a group of flash-based cache devices, allocate a logical drive to each virtual machine and identify a portion of the available cache storage capacity provided by the group of flash-based devices;
providing a plugin to a virtual infrastructure client, the plugin configured to provide virtual machine, virtual machine manager, and guest context to at least one flash-based cache device; and
exposing a driver to each virtual machine to enable the virtual machine to communicate with the group of flash-based cache devices as if the virtual machine were communicating with a dedicated storage device.

2. The method of claim 1, wherein exposing the driver to each virtual machine is responsive to the operating system executing on the virtual machine and to an extent map defined by the cache resource manager.

3. The method of claim 2, wherein each virtual machine only directs I/O operations to extents responsive to the extent map.

4. The method of claim 2, wherein the cache resource manager dynamically modifies the extent map in response to a change in the number of virtual machines operating on the host computing system.

5. The method of claim 1, wherein the plugin is further configured to provide information to a man-machine interface.

6. The method of claim 1, wherein the plugin is further configured to communicate with the virtual machines on behalf of the cache resource manager.

7. The method of claim 1, wherein each driver issues hit or cache fill I/Os on a flash-based cache device from the group with extents mapped to the flash-based cache device, the I/Os are received by the cache resource allocator associated with the logical drive mapped to a particular virtual machine, and the cache resource allocator validates the I/O range and redirects the I/O to the physical device.

8. A cache resource management system suitable for dynamically managing a cache store supported by a group of one or more flash-based devices and a host computer system managing a set of virtual machines, the system comprising:
a cache resource manager application executing on the host computer system and configured with one or more policies for distributing multiples of an identified portion of the available cache storage capacity in accordance with the number of virtual machines supported by the host computing system;
a virtual machine manager executing on the host computer system and arranged with a cache resource allocator and a flash-based cache device driver, the cache resource allocator configured to claim a group of flash-based cache devices, allocate a logical drive to each virtual machine and identify a portion of the available cache storage capacity provided by the group of flash-based devices;
a plugin arranged to communicate with a virtual infrastructure client, the plugin configured to provide virtual machine, virtual machine manager, and guest context to at least one flash-based cache device; and
at least one driver available to each virtual machine to enable communications with the group of flash-based cache devices as if the virtual machine were communicating with a dedicated storage device.

9. The system of claim 8, wherein the at least one driver is configured in accordance with the operating system executing on the virtual machine and is responsive to an extent map defined by the cache resource manager.

10. The system of claim 9, wherein each virtual machine only directs I/O operations to extents responsive to the extent map.

11. The system of claim 9, wherein the cache resource manager dynamically modifies the extent map in response to a change in the number of virtual machines operating on the host computing system.

12. The system of claim 8, wherein the plugin is further configured to provide information to a man-machine interface.

13. The system of claim 8, wherein the plugin is further configured to communicate with the virtual machines on behalf of the cache resource manager.

14. The system of claim 8, wherein each driver issues hit or cache fill I/Os on a flash-based cache device from the group with extents mapped to the flash-based cache device, the I/Os are received by the cache resource allocator associated with the logical drive mapped to a particular virtual machine, and the cache resource allocator validates the I/O range and redirects the I/O to the physical device.

15. A computer-readable medium having stored thereon in computer executable non-transitory form instructions that, when executed on a processing system of a host computer, direct the processing system to operate in accordance with the method of any one of claims 1 to 7.
